# EUROPEAN PATENT APPLICATION

(11) **EP 2 635 000 A1**
(43) Date of publication of application: **04.09.2013**
(21) Application number: 12196434.0
(22) Date of filing: 11.12.2012
(51) Int. Cl.: H04L 29/08, G06F 9/445

(54) **Mobile terminal device and method for sharing application**

(30) Priority: 29.02.2012 KR 20120020911
(71) Applicant: Pantech Co., Ltd, Mapo-gu, Seoul 121-270 (KR)
(72) Inventor: UHM, Yoon Sun, 121-270 Seoul (KR)
(74) Representative: Jordan, Volker Otto Wilhelm

(57) **Abstract**

A method for sharing an application includes selecting an application for sharing in a first mobile terminal device, attaching application information corresponding to the selected application to a message in the first mobile terminal device, and transmitting a message including the application information to a second terminal device. A first mobile terminal device includes an interface to receive a selection input of an application to be shared, an application information processing unit to identify application information corresponding to the selected application, and a transmission interface to transmit the application information to a second mobile terminal device.

## Description

### CROSS-REFERENCE TO RELATED APPLICATION

This application claims priority from and the benefit of Korean Patent Application No. 10-2012-0020911, filed on February 29, 2012, which is hereby incorporated by reference for all purposes as if fully set forth herein.

### BACKGROUND

FIELD

Exemplary embodiments of the present invention relate to a mobile terminal device and a method for sharing an application using a messaging service.

DISCUSSION OF THE BACKGROUND

A first mobile terminal device may access an application store or a host site to retrieve or obtain an application, and the respective application may be downloaded after payment of applicable fees, if any, for procurement. If a user of a second mobile terminal device seeks to obtain the same application at a recommendation by a user of the first mobile terminal device, the second terminal device may select and retrieve the respective application by accessing the application store and downloading the application therefrom, for example, from a list of popular downloaded applications.

Thus, in order to obtain an application recommended by the user of the first mobile terminal device, the user of the second mobile terminal device may connect to the application store and retrieve the recommended application.

### SUMMARY

Exemplary embodiments of the present invention provide a mobile terminal device and a method for sharing an application.

Additional features of the invention will be set forth in the description which follows, and in part will be apparent from the description, or may be learned by practice of the invention.

Exemplary embodiments of the present invention provide a method for sharing an application including selecting an application for sharing in a first mobile terminal device; attaching application information corresponding to the selected application to a message in the first mobile terminal device; and transmitting a message including the application information to a second terminal device.

Exemplary embodiments of the present invention provide a first mobile terminal device including an interface to receive a selection input of an application to be shared; an application information processing unit to identify application information corresponding to the selected application; and a transmission interface to transmit the application information to a second mobile terminal device.

Exemplary embodiments of the present invention provide a mobile terminal device including a reception interface to receive application information corresponding to an application of another mobile terminal device; a drive processing unit to download the application; and a download controller to extract information associated with the application, and to determine whether to download the application.

It is to be understood that both the foregoing general description and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate exemplary embodiments of the invention, and together with the description serve to explain the principles of the invention.

FIG. 1 schematically illustrates mobile terminal devices sharing an application by exchanging messages according to an exemplary embodiment of the present invention.

FIG. 2 illustrates a configuration of a transmission module of a mobile terminal device according to an exemplary embodiment of the present invention.

FIG. 3 illustrates a configuration of a reception module of a mobile terminal device according to an exemplary embodiment of the present invention.

FIG. 4 illustrates a mobile terminal device configured to transmit a message to share an application according to an exemplary embodiment of the present invention.

FIG. 5 illustrates a mobile terminal device to share an application according to an exemplary embodiment of the present invention.

FIG. 6 illustrates a process of a mobile terminal device receiving a message with a shared application according to an exemplary embodiment of the present invention.

FIG. 7 illustrates an information format of an application being shared in a mobile terminal device according to an exemplary embodiment of the present invention.

FIG. 8 is a flowchart illustrating a transmission method for sharing an application according to an exemplary embodiment of the present invention.

FIG. 9 is a flowchart illustrating a reception method for sharing an application according to an exemplary embodiment of the present invention.

### DETAILED DESCRIPTION OF THE ILLUSTRATED EMBODIMENTS

The invention is described more fully hereinafter with reference to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. Throughout the drawings and the detailed description, unless otherwise described, the same drawing reference numerals are understood to refer to the same elements, features, and structures. The relative size and depiction of these elements may be exaggerated for clarity.

It will be understood that when an element is referred to as being "connected to" another element, it can be directly connected to the other element, or intervening elements may be present. Further, it will be understood that for the purposes of this disclosure, "at least one of X, Y, and Z" can be construed as X only, Y only, Z only, or any combination of two or more items X, Y, and Z (e.g., XYZ, XZ, XYY, YZ, ZZ).

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. Furthermore, the use of the terms a, an, etc. does not denote a limitation of quantity, but rather denotes the presence of at least one of the referenced item. The use of the terms "first", "second", and the like does not imply any particular order, but they are included to identify individual elements. Moreover, the use of the terms first, second, etc. does not denote any order or importance, but rather the terms first, second, etc. are used to distinguish one element from another. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof. Although some features may be described with respect to individual exemplary embodiments, aspects need not be limited thereto such that features from one or more exemplary embodiments may be combinable with other features from one or more exemplary embodiments.

Hereinafter, a mobile terminal device to share an application and a method for sharing an application between mobile terminal devices according to exemplary embodiments of the present invention will be described with reference to the accompanying drawings.

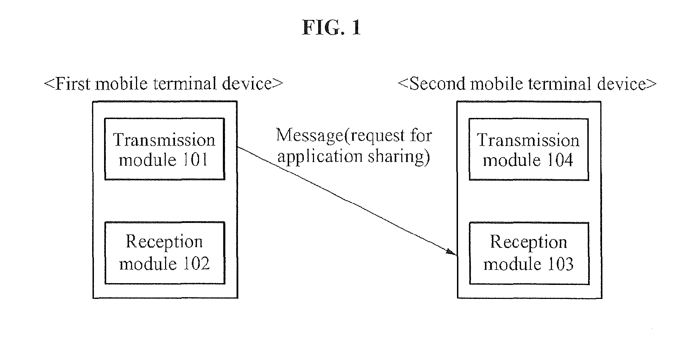

FIG. 1 schematically illustrates mobile terminal devices sharing an application by exchanging messages according to an exemplary embodiment of the present invention.

In FIG. 1, a first mobile terminal device includes a transmission module 101, which may generate a request to share or transmit an application. The request may be transmitted or shared by using a message, but is not limited thereto. More specifically, the first mobile terminal device may be a device, which may generate a request to share an application and transmit the request or a message with the request to share the application to a second mobile terminal device. The first mobile terminal device may further include a reception module 102, which may receive the request or the message with the request to share an application from an external mobile terminal device. According to aspects of the invention, the request may be transmitted with or without a message, which may be generated by a message writing program, a messaging program, or other programs or applications. Further, the request may be transmitted in a form of a message, which may be read by a user or a computing device. However, for purposes of this disclosure, the request may be described as being transmitted with the message, but it is not limited thereto.

According to aspects of the invention, the message may include, without limitation, a Short Message Service (SMS) message, a Multimedia Messaging Service (MMS) message, an internet based message, and the like. The application itself or information associated with the application may be transmitted by the first mobile terminal device. The information associated with the application or application information may at least include information associated with procuring the application, such as a host web address. The application to be shared by the first mobile terminal device may be referred to as a sharing application, application to be shared, or the like.

The second mobile terminal device includes a reception module 103, which may receive the request to share an application or a message with the request to share the application from the first mobile terminal device. More specifically, the second mobile terminal device may be a device, which may receive a message through communicating with the transmission module 101 of the first mobile terminal device. Further, the reception module 103 may download and install the application to be shared, i.e., a sharing application, to the first mobile terminal device in response to an input to download the sharing application referred to in the message. The second mobile terminal device may also further include a transmission module 104, which may transmit the request to share an application or a message about or with a request to share an application to an external mobile terminal device.

Referring to FIG. 1, the transmission module 101 of the first mobile terminal device may generate a request to share an application with the second mobile terminal device and transmit the request by using a message. The message may be sent and/or generated by a messaging program. The reception module 103 of the second mobile terminal device may receive the request to share an application from the first mobile terminal device via the message, download the application to be shared, and installs the selected application, thereby sharing the selected application. The reception module 103 may request a selection or a confirmation to download the application before the downloading process begins.

The transmission module 101 of the first mobile terminal device may transmit the request to share an application or a message including the request to share an application, for example, a MMS message including the application or application information to the second mobile terminal device. The application information may include, without limitation, at least one of an icon image of the selected application, the selected application, for example, an application package file (APK), information on a download path, or the like. The transmission module 101 may transmit application information corresponding to the application to be shared among other applications that may have been previously installed or downloaded in the first mobile terminal device to the second mobile terminal device. Accordingly, the first mobile terminal device may thereby recommend or transmit the application to be shared to a user of the second mobile terminal device.

Also, when the second mobile terminal device comes within a communication distance or range via a particular short-range communication mode, the transmission module 101 of the first mobile terminal device may enable a short-range communication operation and may ask the user of the first mobile terminal device to choose an application to be shared via the short-range communication mode. In an example, the short-range communication operation may be performed using a near field communication (NFC) technology, Bluetooth® technology, a local area network (LAN), and the like. When a selection of an application from the user is received, the transmission module 101 may transmit information on the selected application to the second mobile terminal device via an available short-range communication mode, for example a local area network (LAN). However, aspects are not limited thereto, such that the application to be shared may be transmitted and/or received using a mobile network.

When the request or the message with the request to share an application including the application or application information is received from the first mobile terminal device, the reception module 103 of the second mobile terminal device may run an agent program. For example, the agent program may include, without limitation, a web browser, a market application, and the like. Further, the agent program may be run by using information included in the message about the application to be shared to support downloading of the selected application.

Hereinafter, for convenience of description, a mobile terminal device including at least one transmission module, which may generate a request to share an application, may be referred to as a first mobile terminal device. A mobile terminal device including at least one reception module, which may receive a request to share an application through a message, may be referred to as a second mobile terminal device. However, aspects of the invention are limited thereto, such that the first terminal device may also include a reception module to receive a request to share an application or a message with the request to share an application, and the second terminal device may include a transmission module to transmit a request to share an application or a message with the request to share an application.

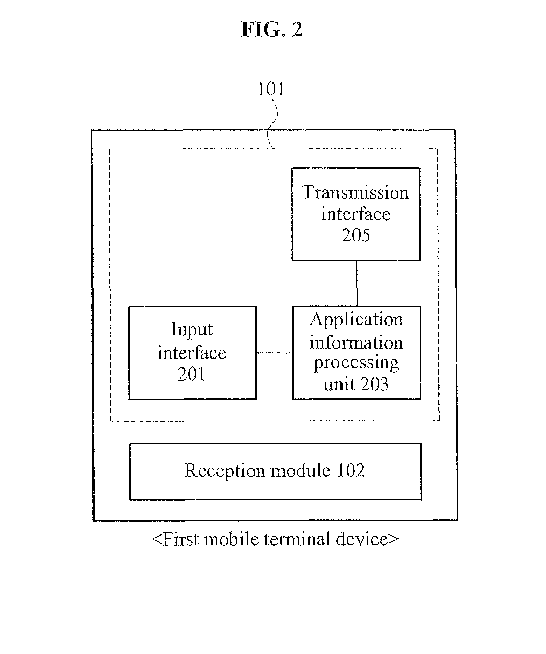

FIG. 2 illustrates a configuration of a transmission module of a mobile terminal device according to an exemplary embodiment of the present invention.

Referring to FIG. 2, the transmission module 101 of the first mobile terminal device includes an input interface 201, an application information processing unit 203, and a transmission interface 205. Further, as illustrated in FIG. 2, the first mobile terminal device also includes a reception module 102.

The input interface 201 may receive a selection of an application to be shared when a message writing program, a messaging program, or another program is active or executed. For example, when a messaging operation is executed using the message writing program or the messaging program, the input interface 201 may provide an application list, for example, a list of applications that may previously be installed, downloaded, or intended to be downloaded in the first mobile terminal device. The input interface 201 may also receive an input to select an application from the application list, which may be shared with another terminal. However, aspects of the invention is not limited thereto, such that the input interface 201 may receive a selection of an application to be shared before or after the message writing program or messaging program is run or executed. Further, the first terminal device may be configured that a default application may be configured to transmit a default application to be shared without receiving a separate selection input. Moreover, the message and/or request need not be generated by a message writing program or message program; for example, the message and/or request may be generated by or through another application or program.

Further, the input interface 201 may generate a separate sharing icon, for example, an icon image that may be attached to an application icon or disposed adjacent to or surrounding the application icon. The sharing icon may be used to execute an instruction related to the sharing an application. When the sharing icon is selected, the input interface 201 may execute the message writing program to generate a message with the corresponding application or information associated with the corresponding application. However, aspects of the invention are not limited thereto, such that the application to be shared or information associated with the application to be shared may be attached using a message writing program, other programs or applications, a menu operation, an application list, and the like.

The application information processing unit 203 may write information associated with the application to be shared or shared application information, which may include data to identify a download page related to the selected application. More particularly, when a touch is inputted on an external mobile terminal device that may receive the request to share an application or the message with the request to share an application, such as a second mobile terminal device, the application information processing unit 203 may process the application information to load the download page by running the agent program by using the data to identify a download page as an instruction. However, aspects of the invention are not limited thereto, such that the application may be attached to the message and no processing of application information may be performed.

The transmission interface 205 may generate a message with the application information using the message writing or other program or application and transmit the message to the second mobile terminal device. The transmission interface 205 may insert other attributes or data associated with the application along with the application information that may be shared. Other attributes or data associated with the application may be included in header information, which may include, without limitation, at least one of an application name, a version number, and a date of request. In an example, the application information may include at least one of a name of a shared application, identification information on a person or a mobile terminal device (e.g., second mobile terminal device) that may receive the shared application, identification information of a person or a mobile terminal device (e.g., first mobile terminal device) that may transmit the shared application, information on an application requested to be downloaded, an application download path, header information and the like. The application information may be inputted into the message and transmitted to the second mobile terminal device.

Further, when the second mobile terminal device comes within a predetermined distance, for example, a reference distance that may enable communication via a particular short-range communication mode, the transmission interface 205 may process the application information to include a user interface (UI) that may be used to share an application via a short-range communication. For example, short-range communication may include wireless fidelity (Wi-Fi), NFC, Bluetooth®, LAN and the like. Further, the transmission interface 205 may display various information associated with the application to be shared on a screen, and provide the application information to the second mobile terminal device through the LAN in response to an input selection received on the UI. The transmission interface 205 may display a short-range communication image in relation to the application information, along with a request for an execution menu when the short-range communication is within range. When the short-range communication image is selected, the transmission interface 205 may transmit the application information to the second mobile terminal device using the short-range communication.

Further, the transmission interface 205 may determine whether a fee may be associated with the application to be shared. If a fee is associated with the application to be shared, fee information may be included in the application information. When the application is determined to be free of charge, the transmission interface 205 may transmit the application, for example, an APK file, directly to the second mobile terminal device so that the second mobile terminal device may omit loading of the download page that may be used to download the shared application. When the application is determined to have a fee associated thereto, the transmission interface 205 may transmit the application or application information to the second mobile terminal device upon receiving a confirmation from a user of the first terminal device. However, aspects of the invention are not limited thereto, such that the transmission interface 205 may be configured to transmit the application or application information to an intended recipient if the fee is below a predetermined amount or before payment of the fee has been secured.

Thus, the mobile terminal device including the transmission module 101 according to exemplary embodiments of the present invention may offer an environment to a user to recommend an application to an external mobile terminal device.

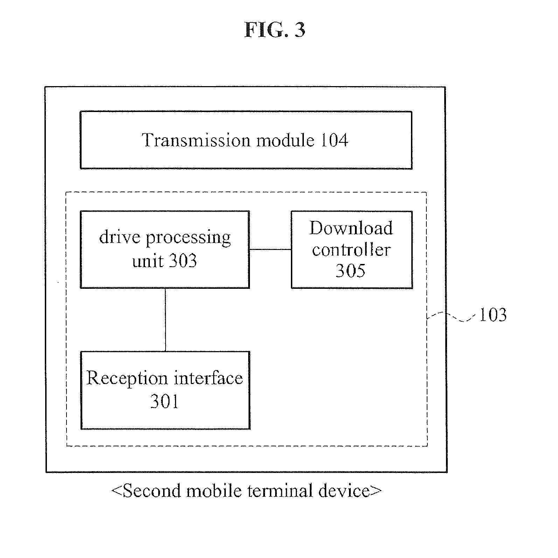

FIG. 3 illustrates a configuration of a reception module of a mobile terminal device according to an exemplary embodiment of the present invention.

The reception module 103 includes a reception interface 301, a drive processing unit 303, and a download controller 305. Further, as illustrated in FIG. 3, the second mobile terminal device may also include a transmission module 104.

The reception interface 301 may receive a message for sharing an application from the first mobile terminal device. The reception interface 301 may extract other attributes or data associated with the application along with the application information that may be shared. In an example, the application information may include at least one of a name of a shared application, identification information on a person, or a mobile terminal device (e.g., second mobile terminal device) that may receive the shared application, identification information on a person or a mobile terminal device (e.g., first mobile terminal device) that may transmit the shared application, information on an application requested to be downloaded, an application download path, header information, and the like.

Further, when the second mobile terminal device comes within a predetermined distance to a first mobile terminal device or a short-range communication network, the reception interface 301 may be provided with the application information or an application itself. For example, a free application, corresponding to the application information may be received from the first mobile terminal device via the LAN when the second mobile terminal device is located within the LAN. However, aspects of the invention are not limited thereto, such that the network may include a wireless network, NFC, Bluetooth®, and the like. Further, before receiving an application or application information from the first mobile terminal device, a UI may be displayed, requesting the user of the second terminal device whether the user intends to receive the application.

The drive processing unit 303 may run an agent program based on data extracted from the application information. Further, the drive processing unit 303 may run the agent program in response to the input of a first selection of the application information included in the message. Also, the drive processing unit 303 may process address data recorded in the application information as instruction, inputs the address data in an address window of the agent program to run the agent program, and connects to the download page of a store site identified by the address data.

Further, time duration of a touch may be measured when a touch is detected or received with respect to the application information. When the duration of a touch meets or exceeds a predetermined period of time, an agent program may be executed. When the duration of a touch is below the predetermined period of time, a download program may be executed to display a download image, which may receive a selection input from a user. If the user selects to receive the application, the application may be downloaded by an agent program. For example, when a second touch input with a pressing time is pressed for five seconds, whereas a first touch is pressed for two seconds with respect to the application information, the drive processing unit 303 may run a download program to display a download image on the screen and run the agent program for the first touch. The drive processing unit 303 may run the agent program to using application information without running a separate download program for the second touch.

The download controller 305 may load and display the download page on the screen. Further, the download controller 305 may support downloading of the application while running the agent program. The download controller 305 may also extract information, which may indicate as to whether a fee is to be charged for the application. When the application is determined to be free of charge, the download controller 305 may continue to download the application. However, when the download controller 305 determines that a fee may be charged to obtain the application, the download controller 305 may download when an instruction to continue downloading of the application is received. However, aspects of the invention are not limited thereto, such that a preference may be set to allow downloads of applications below a predetermined amount or before payment of the fee is secured without receiving instructions to continue downloading.

When the agent program is run in response to the input of a selection of the download image, the download controller 305 may display a progress bar showing a download status of the application on the screen.

More specifically, the download controller 305 may display the progress bar, which may indicate an amount of data that may have been downloaded with respect to the total size of data corresponding to the application and thus, enabling recognition of the download status of the application. The download controller 305 may run the agent program as a background application so that the download page loaded as a result of the agent program being run may not be exposed.

When the message includes the application or application information, the download controller 305 may determine from the t information associated with the application to determine whether a fee is to be charged for the application. Further, the download controller 305 may determine whether a fee is to be charged in response to a determination or decision to download application included in the message. When the application is determined to be free of charge, the download controller 305 extracts the application or information associated with the application from the message. Accordingly, the second mobile terminal device may be provided with the application from the first mobile terminal device through the message, and loading of the download page to download the application may be omitted.

When it is determined that a fee is to be charged for the application, the download controller 305 may restrict extraction of the application or the application information from the message. Further, the download controller 305 may protect content included in the message.

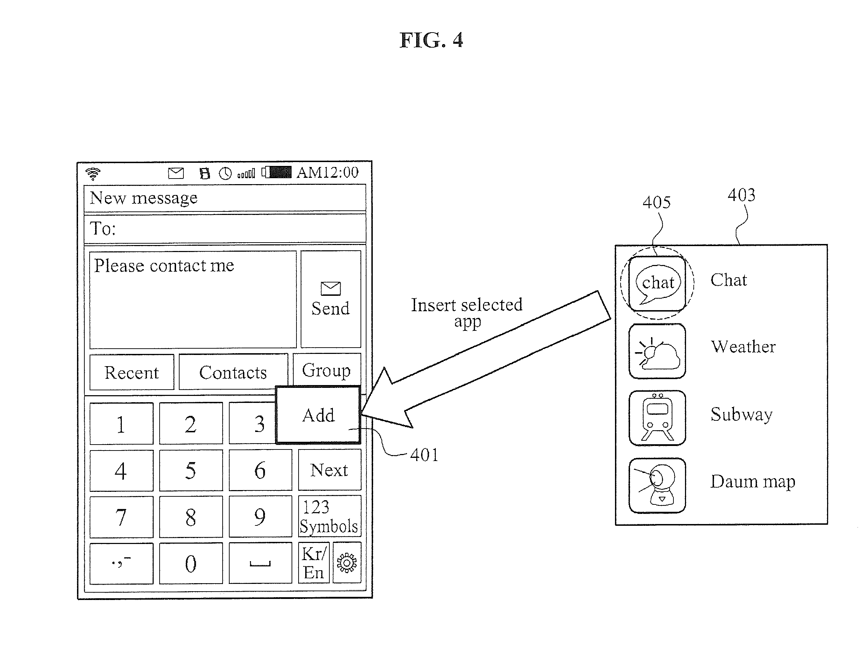

FIG. 4 illustrates a mobile terminal device configured to transmit a message to share an application according to an exemplary embodiment of the present invention.

Referring to FIG. 4, the first mobile terminal device receives a selection of an application to be shared on an application list, generates a message with attached application information corresponding to the selected application with a message writing program, and transmits the message including the application information to the second mobile terminal device.

Referring to FIG. 4, when the message writing program is activated, the first mobile terminal device may provide an application list 403. A user may provide a selection input of an application by pressing on an "Add" button 401. More specifically, the first mobile terminal device may receive a selection input of a chatting application 405 from the application list 403. The first mobile terminal device may generate a message by using the attached application information corresponding to the selected chatting application 405 with the message writing program and transmit the message to the second mobile terminal device. However, aspects of the invention are not limited thereto such that the first mobile terminal device may transmit the application itself using the message writing or other program or application.

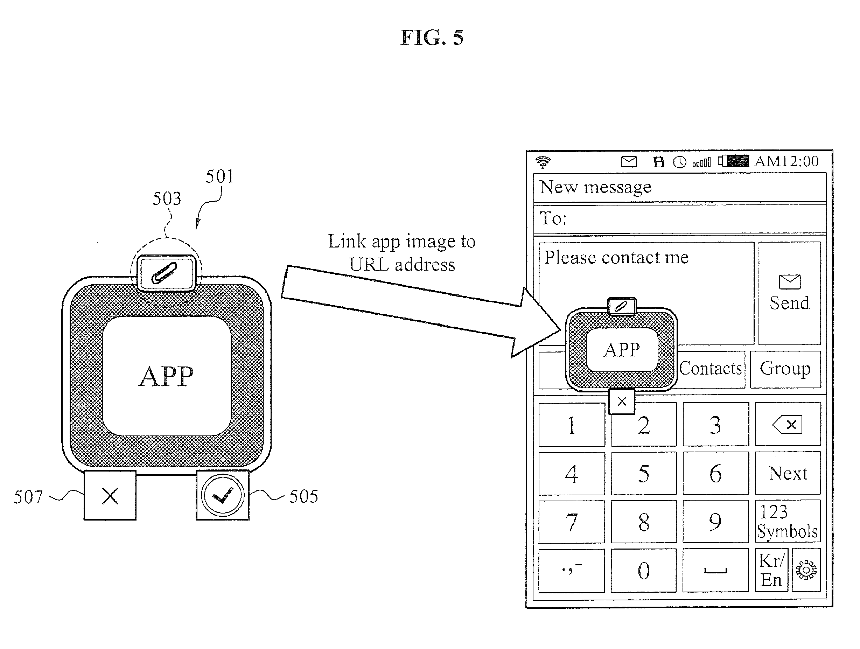

FIG. 5 illustrates a mobile terminal device to share an application according to an exemplary embodiment of the present invention.

Referring to FIG. 5, the first mobile terminal device generates a message with the attached application information corresponding to an application to be shared with the message writing program. The first mobile terminal device may transmit the message with the application information to the second mobile terminal device.

As shown in FIG. 5, an application icon 501 may be surrounded by one or more sub-icons, including a separate sharing icon 503, a short-range communication image 505, and a delete image 507. In an example, by clicking on the separate sharing icon 503, a default message writing program may be executed with the corresponding application information attached thereto. Further, the application information corresponding to the application icon 501 may be attached to a message writing program that may be activated by the first mobile terminal device if the separate sharing icon 503 is selected when the message writing program is run. When the short-range communication image 505 is selected or clicked on, the corresponding application may be transmitted to a target mobile terminal device in a short range communication mode. When the delete image 507 is selected or clicked on, the corresponding application may be deleted.

The first mobile terminal device may generate a separate sharing icon 503, for example, an icon image that may be attached to the application icon 501. However, the sharing icon 503 may be located in a surrounding area of the application icon 501 without being attached thereto. The sharing icon 503 may be provided to allow an application or corresponding application information to be attached to a message provided by a message writing program on the first mobile terminal device. More specifically, the sharing icon 503 may execute an instruction related to sharing an application corresponding to the application icon 501 displayed on an idle screen. When the sharing icon 503 is selected, the first mobile terminal device may automatically generate a message using the attached application information, which may include the application information 501 corresponding to the application to be shared with the message writing program. Further, the first mobile terminal device may transmit the message with the application information 501 to the second mobile terminal device.

The sharing icon 503 may be provided as a sub-icon with respect to the application icon 501. Further, the sharing icon 503 may be displayed to be positioned within a reference proximity from the application icon 501. More specifically, the sharing icon 503 may be provided as a sub-icon to be located within the surrounding border of the application icon 501. The sharing icon 503 may be displayed in response to a request to execute the application by clicking on the application icon 501. For example, a single click on the application 501 may display the sharing icon 503, or the sharing icon 503 may be displayed as a default. However, aspects of the invention are not limited thereto, such that the sharing icon 503 may be displayed in response to a menu operation.

Further, the first mobile terminal device may display a short-range communication image 505 in relation to the application icon 501 in response to a request to execute transmission of the corresponding application. When the short-range communication image 505 is selected, the first mobile terminal device may transmit the application information 501 to the second mobile terminal device. The application to be shared may be transmitted with or without using a message program using the short-range communication. Further, the first mobile terminal device may determine whether a fee may be charged for the application corresponding to the application icon 501, and may transmit the application or the application information to the second mobile terminal device when the application is determined to be free of charge. However, aspects of the invention are limited thereto, such that the first mobile terminal device may be configured to transmit the respective application or application information without regard to a fee, or be configured to transmit without regard to a fee below a predetermined amount.

The first mobile terminal device may also display a delete image 507 with respect to the application icon 501 in response to a request to execute the application by clicking on the application icon 501. When the delete image 507 is selected, the first mobile terminal device may delete both the application icon 501 and the application corresponding to the application icon 501.

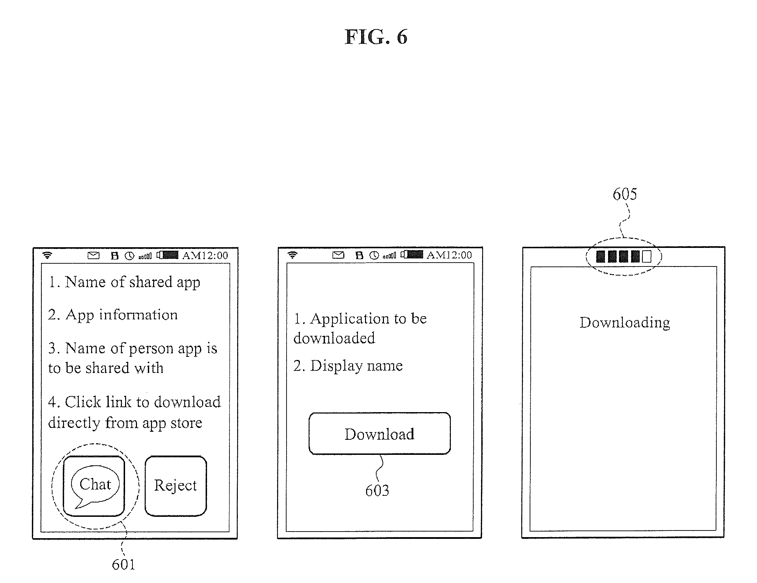

FIG. 6 illustrates process of a mobile terminal device receiving a message with a shared application according to an exemplary embodiment of the present invention.

Referring to FIG. 6, the second mobile terminal device receives a message including an application to be shared or information associated with the application to be shared from the first mobile terminal device. The second mobile terminal device may extract and display other attributes or data associated with the application along with the application information that may be shared. Application information may include, without limitation, at least one of a name of a shared application, identification information on a person or a mobile terminal device (e.g., second mobile terminal device) that may receive the shared application, identification information on a person or a mobile terminal device (e.g., first mobile terminal device) that may transmit the shared application, information on an application requested to be downloaded, an application download path, header information, and the like. The application information may be extracted from the message.

Referring to FIG. 6, when a touch, for example, a touch with respect to chatting application information 601 is inputted, the second mobile terminal device may run a download program to display a download button 603 on the screen. Further, the second mobile terminal device may run an agent program in response to a selection or clicking of the download button 603. Accordingly, the second mobile terminal device may thereby support downloading of a chatting application. Further, if a fee is associated with the chatting application, a confirmation screen may be displayed to request confirmation of the download request in view of the fee that may be associated with the chatting application.

Further, the second mobile terminal device may display a progress bar 605 showing a status of the application download in an upper part of the screen. However, aspects of the invention are not limited thereto, such that the progress bar 605 may be displayed on a side of the screen, bottom of the screen, and other parts of the screen.

The second mobile terminal device may divide the display screen into multiple areas of use, for example, an area for an idle screen and an area for executing another application. However, the progress bar 605 may be displayed in an unused area of the display screen while downloading the application to enable multi-tasking.

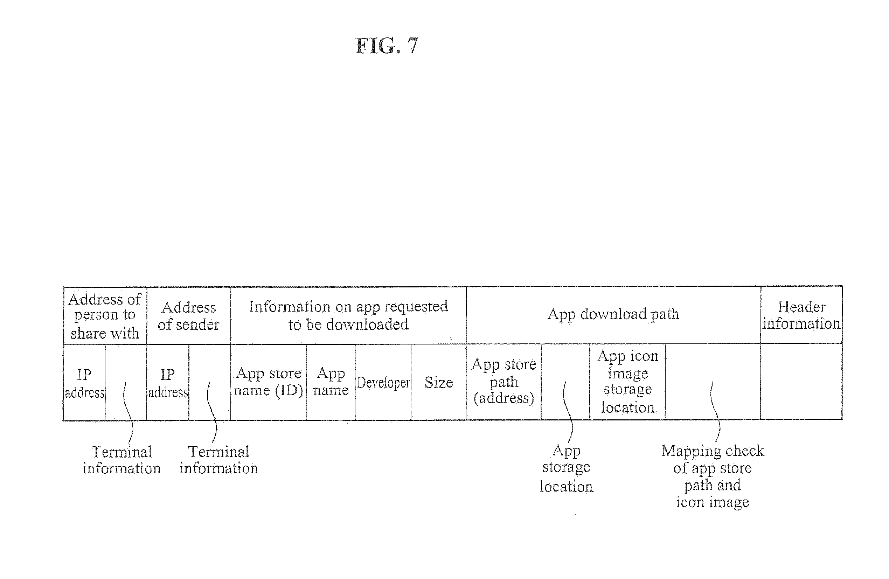

FIG. 7 illustrates an information format of an application being shared in a mobile terminal device according to an exemplary embodiment of the present invention.

Referring to FIG. 7, the first mobile terminal device may generate a message by using the attached application information corresponding to an application to be shared. The message may be transmitted to the second mobile terminal device using the message writing or other program or application.

For example, the first mobile terminal device may insert information associated with the application being shared as well as other attributes or data associated with the application into the message and transmits the message to the second mobile terminal device. Here, the first mobile terminal device may insert the information associated with the application being shared into the message.

Referring again to FIG. 7, application information includes identification or address information on a person or a mobile terminal device (e.g., second mobile terminal device) an application is to be shared with. Identification information may include information, such as, an IP address and terminal information, which may include at least one of an International Mobile Equipment Identity (IMEI), Mobile Equipment Identifier (MEID), and a Mobile Subscriber Integrated Services Digital Network Number (MSISDN). Similarly, the application information may also include identification or address information on a person or a mobile terminal device (e.g., first mobile terminal device) that seeks to share the application. However, aspects of the invention are not limited thereto, such that identification information may include a person's name, personal information associated with the person, either recipient or sender, and the like.

Further, the application information may also include information on an application requested to be downloaded, or application biography, which may include an application store name or identification (ID), an application name, developer of the application, and a size of the application. However, aspects of the invention are not limited thereto, such that cost information, version number, date of release, and the like may also be included.

The application may also include an application download path or host information. Application download path information may include information, such as, an application store path, application storage location, application icon image storage location, and a mapping check of an application store path and application icon image.

The application information also includes header information that may be inputted into the message. In an example, the other attributes or data associated with the application may be included in the header information.

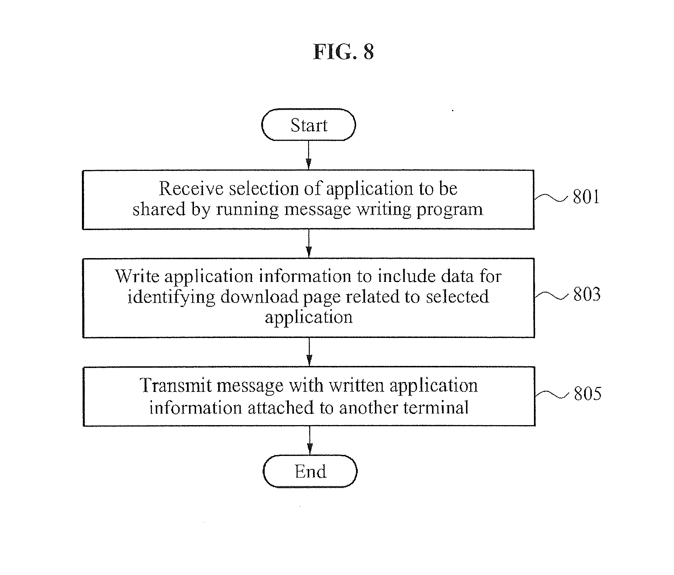

FIG. 8 is a flowchart illustrating a transmission method for sharing an application according to an exemplary embodiment of the present invention.

Referring to FIG. 8, in operation 801, a mobile terminal device receives selection of an application to be shared, which may be transmitted by running the message writing program. Here, when the message writing program is activated, the mobile terminal device may provide a list of applications that may be installed, downloaded, or scheduled to be downloaded in the mobile terminal device. Further a selection of an application to be shared may be received. However, aspects of the invention is not limited thereto, such that the application to be shared may be selected by using a sharing icon (e.g., sharing icon 503 of FIG. 5) that may be associated with the application to be shared. Further, a default or a predetermined message writing or other program or application may be executed in response to selecting the sharing icon.

In operation 803, the mobile terminal device writes application information to include data that may be used to identify a download page related to the selected application. The mobile terminal device may configure the message or the attached application information so that the download page may be loaded when an external mobile terminal device receives the message transmitted from the mobile terminal device and inputs a selection to receive the application to be shared. In an example, application information may include, without limitation, at least one of a name of an application to be shared, identification information on a person or a mobile terminal device that may receive the application to be shared, identification information of a person or a mobile terminal device that may transmit the application to be shared, an application download path, header information and the like. However, aspects of the invention are not limited thereto, such that that application itself may be attached to the message.

In operation 805, the mobile terminal device transmits the message with the written application information attached to the external mobile terminal device. Further, the mobile terminal device may generate the message with the attached application information using the message writing program and transmit the message to the external mobile terminal device.

Further, when the external mobile terminal device comes within a predetermined distance, for example, a communication distance that may enable a short-range communication mode to conduct communication with another device (e.g., NFC, Bluetooth®, Wi-Fi, and the like), the mobile terminal device may enable short-range communication, process the application information to include a UI that may be used to share the application via short-range communication, and display the information on a screen, thereby receiving input about whether to share the application through a short-range communication mode. When a selection input of the application is received on the UI, the mobile terminal device may provide the application information to the external mobile terminal device through a network in response to the input of the selection.

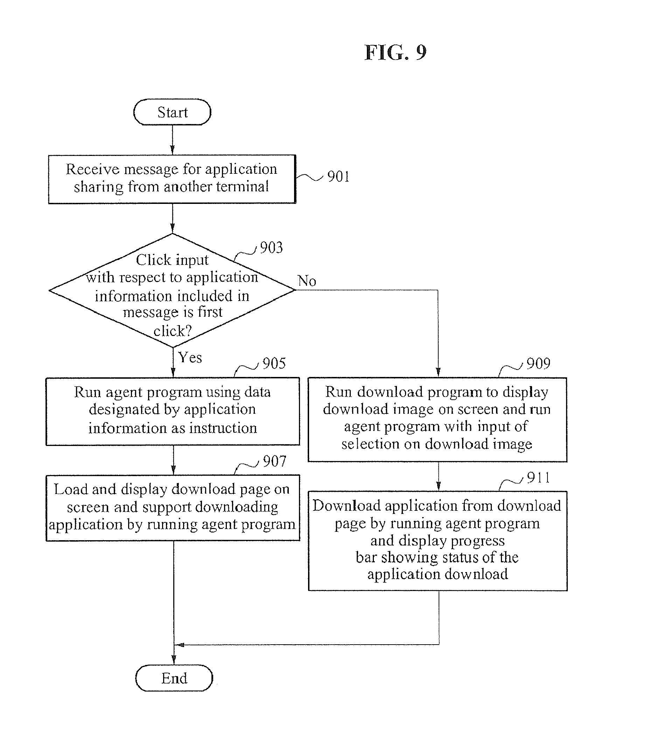

FIG. 9 is a flowchart illustrating a reception method for sharing an application according to an exemplary embodiment of the present invention.

Referring to FIG. 9, in operation 901, a receiving mobile terminal device receives a message with a request to share an application from a transmitting mobile terminal device. However, aspects of the invention are not limited thereto, such that the request to share an application may be received without the message, in a form of a message, or by another operation.

In operation 903, the receiving mobile terminal device receives a touch input or a click input with respect to application information included in the message. Further, in operation 903, the mobile terminal device may determine the type of touch input received with respect to the application information included in the message. When the touch input is determined to be a touch in a first touch input mode, the mobile terminal may run an agent program without a download program in operation 905. When the touch input is determined to be a touch in a second touch input mode, the mobile terminal device may run a download program to display a download image on the screen and run the agent program in operation 909.

For example, if the mobile terminal device receives the touch input on the message that is pressed and held for a period meeting or exceeding a predetermined period of time, the respective touch input may be determined to be a long input and the method proceeds to operation 905. If the mobile terminal device receives the touch input on the message that is pressed and held below the predetermined period of time, the respective touch input may be determined not be a long input and the method proceeds to operation 909. In an example, the touch input may be received on an application icon corresponding to the application to be shared, or a link to the respective application.

In operation 905, the mobile terminal device runs or executes an agent program using data designated by the application information. Here, the mobile terminal device may use the address data recorded in the application information as the instruction and input the address data in an address window of the agent program to run the agent program. Accordingly, the agent program may connect to a download page in an application store website identified by the address data.

In operation 907, the mobile terminal device loads and displays the download page on a screen and supports downloading the application by running the agent program. When the message includes the application, the mobile terminal device may determine or verify information associated with the application to be shared to determine whether a fee is to be charged for the application. The fee determination may be performed in response to a selection to receive the application included in the message. When the application is determined to be free of charge, the mobile terminal device may extract the application from the message. If a fee is determined to be associated with the application, a confirmation message may be displayed to the user requesting the user to either proceed with the download or cancel the download. The confirmation message may include fee information. However, aspects of the invention are limited thereto, such that the mobile terminal device may be configured to transmit the respective application or application information without regard to a fee, or be configured to transmit without regard to a fee below a predetermined amount.

In operation 911, the mobile terminal device may download the application from the download page, which may be loaded by running the agent program, and display a progress bar status of the application download on a display screen.

Further, when the external mobile terminal device is located within a predetermined distance or range of a short-range communication device or network, the mobile terminal device may be provided with application information associated with an application to be shared from the external mobile terminal device through the short-range communication device or network.

The exemplary embodiments according to the present invention may be recorded in computer-readable media including program instructions to implement various operations embodied by a computer. The media may also include, alone or in combination with the program instructions, data files, data structures, and the like. The media and program instructions may be those specially designed and constructed for the purposes of the present invention, or they may be of the kind well-known and available to those having skill in the computer software arts. Examples of computer-readable media include magnetic media, such as hard disks, floppy disks, and magnetic tape; optical media, such as CD ROM discs and DVD; magneto-optical media, such as floptical discs; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described exemplary embodiments of the present invention.

According to exemplary embodiments of the present invention, a mobile terminal device and a method for sharing an application in a mobile terminal device may run an agent program in response to the input of a selection of application information included in a message from an external mobile terminal device. Further, the mobile terminal device may load and display a download page on a screen by running the agent program to support downloading of an application to promote accessibility and utilization of an application recommended by the external mobile terminal device.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.
A method for sharing an application includes selecting an application for sharing in a first mobile terminal device, attaching application information corresponding to the selected application to a message in the first mobile terminal device, and transmitting a message including the application information to a second terminal device. A first mobile terminal device includes an interface to receive a selection input of an application to be shared, an application information processing unit to identify application information corresponding to the selected application, and a transmission interface to transmit the application information to a second mobile terminal device.

## Claims

1. A method for sharing an application, comprising:
selecting an application for sharing in a first mobile terminal device;
attaching application information corresponding to the selected application to a message in the first mobile terminal device; and
transmitting a message comprising the application information to a second terminal device;
and preferably further comprising:
determining whether a fee is associated with the application.

2. The method of claim 1, further comprising:
receiving the message in a second mobile terminal;
receiving an input for downloading the application; and
running an agent program for downloading the application;
and preferably further comprising:
determining whether the input is a first type input or a second type input; and
running a download program for downloading the application if the input is determined to be the second type input.

3. The method of claim 1, further comprising:
receiving the message in a second mobile terminal;
receiving an input for downloading the application;
determining whether the input is a first type input or a second type input; and
running an agent program for downloading the application if the input is determined to be the first type input;
wherein the first type input preferably is an input detected for a predetermined period of time or longer, and the second type input preferably is an input detected for a duration less than the predetermined period of time.

4. The method of one of claims 1 to 3,
wherein the application information comprises the application;
or
wherein the application information comprises at least one of identification information of a transmitting mobile terminal device, identification information of a receiving mobile terminal device, an application biography, application download path, and header information.

5. The method of one of claims 1 to 4, wherein the application is selected from a list of applications comprised in the first mobile terminal;
or
wherein the application is selected by clicking on a separate sharing sub-icon associated with an application icon corresponding to the application.

6. The method of one of claims 1 to 5,
wherein the message is generated by a message writing program;
or/and
wherein the application information comprises an icon image.

7. The method of one of claims 1 to 6,
wherein the application information is transmittable when the first mobile terminal device is within a range of a short-range communication network;
or/and
wherein the application information is received when the second mobile terminal device is within a range of a short-range communication network.

8. A first mobile terminal device, comprising:
an interface to receive a selection input of an application to be shared;
an application information processing unit to identify application information corresponding to the selected application; and
a transmission interface to transmit the application information to a second mobile terminal device.

9. The first mobile terminal device of claim 8,
wherein the application information comprises at least one of the application and an icon image;
or/and
wherein the application information comprises at least one of identification information of the first mobile terminal device, identification information of the second mobile terminal device, an application biography, application download path, and header information;
or/and
wherein the application information is transmitted in a message.

10. The first mobile terminal device of claim 8 or 9,
wherein the application is selectable from a list of applications comprised in the first mobile terminal;
or/and
wherein the application is selectable by clicking on a separate sharing sub-icon associated with an application icon corresponding to the application.

11. The first mobile terminal device of one of claims 8 to 10, wherein the application information is transmittable when the first mobile terminal device is within a range of a short-range communication network.

12. A mobile terminal device, comprising:
a reception interface to receive application information corresponding to an application of another mobile terminal device, said application information preferably comprising an icon image of said application;
a drive processing unit to download the application; and
a download controller to extract information associated with the application, and to determine whether to download the application;
wherein the download controller preferably is adapted to determine whether a fee is associated with the application.

13. The mobile terminal device of claim 12, wherein the reception interface is adapted to receive an input to download the application from the message, and the drive processing unit is adapted to determine whether the input is a first type input or a second type input.

14. The mobile terminal device of claim 13,
wherein the drive processing unit is adapted to execute an agent program if the input is determined to be the first type;
or/and
wherein the drive processing unit is adapted to execute a download program if the input is determined to be the second type.

15. The mobile terminal device of one of claim 12 to 14,
wherein the application information is received in a message;
or/and
wherein the application information is receivable if the mobile terminal device is determined to be located within a range of a short-range communication network.

16. System for effecting the method of one of claims 1 to 7, comprising a first mobile terminal device according to one of claims 8 to 11 and a second mobile terminal device according to one of claims 12 to 15.
